## Europäisches Patentamt
## European Patent Office
## Office européen des brevets

(19)

(11) Numéro de publication: **0 221 792**
**B1**

(12) **FASCICULE DE BREVET EUROPEEN**

(45) Date de publication du fascicule du brevet:
06.12.89

(51) Int. Cl.⁴: **H04L 1/08**, H04N 7/00

(21) Numéro de dépôt: 86402052.4

(22) Date de dépôt: 18.09.86

(54) Procédé et dispositif de transmission de données numériques à réduction des effets de la distorsion intersymbole.

(30) Priorité: 18.09.85 FR 8513826

(43) Date de publication de la demande:
13.05.87 Bulletin 87/20

(45) Mention de la délivrance du brevet:
06.12.89 Bulletin 89/49

(84) Etats contractants désignés:
DE IT NL

(56) Documents cités:
EP-A- 0 077 712
GB-A- 2 052 217

GLOBECOM'82 - IEEE GLOBAL
TELECOMMUNICATIONS CONFERENCE, Conference
record, vol. 1 des 3, Miami, 29 novembre
- 2 décembre 1982, pages A.5.1 -
A.5.10, Globecom'82 Communications - A synergistic
technology, New York, US; M. SABLATASH et al.: "An
ISO OSI layered architecture for the Canadian
broadcast telidon system": 63-68 (Jan. 31-Feb. 1, 1984)
000

(73) Titulaire: ETAT FRANCAIS repr. par le Secrétaire d'Etat
aux Postes & Télécommunications (Centre National
d'Etudes des Télécommunications), 38-40 Rue du
Général Leclerc, F-92131 ISSY LES MOULINEAUX(FR)
Titulaire: TELEDIFFUSION DE FRANCE, 10, rue
d'Oradour sur Glane, F-75932 Paris Cédex 15(FR)

(72) Inventeur: Renault, Denis, 6, rue de la Normandiere,
F-35510 Cesson Sevigne(FR)
Inventeur: Lancelot, Jean-Yves, 18, rue de Brest Boite
No. 13, F-35000 Rennes(FR)
Inventeur: Bauduin, Jean Pierre, Riniac,
F-35270 Combourg(FR)

(74) Mandataire: Fort, Jacques et al, CABINET
PLASSERAUD 84, rue d'Amsterdam, F-75009 Paris(FR)

## Description

L'invention concerne la transmission et la diffusion de données numériques et elle a plus particulièrement pour objet un procédé et un dispositif mettant en oeuvre un protocole de type ISO dont la couche transport autorise les répétitions de blocs de données. L'invention trouve une application particulièrement importante, bien que non exclusive, dans les procédés et dispositifs utilisant les normes DIDON dont on pourra trouver une description dans le rapport R 957 du CCIR intitulé "Caractéristiques de système pour une norme internationale de videographie diffusée (TELETEXTE), couches 1 à 4". Mais cette application n'est nullement exclusive. L'invention est également applicable à la partie multiplex affectée à la diffusion du son et des données suivant des procédures d'un signal de télévision, elle est compatible avec les systèmes de télétexte qui prévoient un octet de répétition, tel que le NABTS.

On a déjà proposé d'augmenter la qualité de transmission lors de la diffusion de données par répétition de groupes de données. Mais l'expérience a montré que l'amélioration ainsi obtenue était très limitée lorsque le support de transmission présente des phénomènes de non linéarité et/ou d'écho qui se traduisent par des distorsions intersymbole. En effet, de telles distorsions affectent un élément binaire ou bit transmis en fonction des éléments binaires qui lui sont adjacents. En conséquence, si on répète une même séquence sans la modifier, les distorsions intersymbole seront les mêmes à chaque apparition de la séquence et provoqueront les mêmes erreurs sur les mêmes éléments binaires à chaque fois.

On a par ailleurs proposé des procédés intervenant en aval de la transmission, c'est-à-dire au niveau du récepteur et sur la couche physique du modèle ISO. Ces procédés utilisent un circuit numérique adaptatif agissant sur le signal analogique démodulé, par exemple pour régler au mieux le seuil de décision entre la valeur 1 et la valeur 0. Un tel procédé, par exemple celui décrit dans le document FR-A-2 556 530, tend à réduire les effets des distorsions intersymbole une fois qu'ils sont intervenus sur l'ensemble des séquences identiques en corrigeant dynamiquement le seuil de décision. Ces procédés compliquent notablement les récepteurs par l'obligation de prévoir des circuits adaptatifs.

L'invention vise à fournir un procédé et un dispositif visant à réduire la perte de qualité due aux effets de distorsions intersymboles. Pour cela, l'invention utilise un brassage des données, en lui-même connu, mais pour un résultat différent, à savoir éviter les longues séquences de symboles identiques qui gênent la récupération d'horloge. Suivant un aspect de l'invention, celle-ci propose un procédé de transmission ou diffusion de données numériques mettant en oeuvre un protocole ISO dont la couche transport autorise les répétitions de blocs de données, caractérisé en ce que, pour réduire les effets de la distorsion intersymbole, on émet chaque bloc de données après l'avoir soumis à une opération de brassage linéaire avec une séquence de brassage différente à chaque émission d'un même bloc, la séquence de brassage étant générée à partir des informations de contrôle de la couche transport.

Du fait que les séquences de brassage sont transmises par la procédure normale de transmission elle-même, le procédé n'implique pas de complications notables et, au surplus, les séquences de brassage bénéficient du même niveau de protection que les informations de contrôle qui ont permis de les générer. Du fait du brassage, chaque occurence d'une même séquence de données à transmettre est diffusée sous forme d'une séquence différente, donc sans être affectée des mêmes erreurs. La détection, et éventuellement la correction, des erreurs, en est facilitée.

Il faut incidemment remarquer que le procédé suivant l'invention est complètement différent de ceux qui ont pour but d'encrypter l'information pour la cacher et exigent une séquence d'encryptage non récupérable directement. Le but recherché ici est de renforcer, et ce le plus simplement possible, l'utilité des répétitions pour pallier les effets des phénomènes de distorsion intersymbole.

A titre d'exemple de procédé de diffusion à encryptage, on peut citer le document EP-A-077712. Suivant ce document, les données émises peuvent être chiffrées, c'est-à-dire soumises à un traitement visant à rendre l'accès conditionnel, donc à atteindre un résultat tout à fait différent de celui recherché ici, à savoir assurer une protection contre les erreurs de transmission. La séquence de brouillage est fournie par un générateur d'octets chiffrants et non pas générée à partir des informations de contrôle. Cette disposition ne permet pas de bénéficier des avantages définis plus haut du fait que le brouillage intervient avant l'équipement d'émission et que les groupes subissent les mêmes déformations à chaque répétition. Rien dans le document cité ne suggère de substituer une séquence générée à partir des informations de contrôle (ou à partir de toute autre information) à une séquence fournie par un générateur local.

Le document GB-A-2 052 217 décrit un procédé de transmission dans lequel on répète chaque mot et on émet, non pas le mot lui-même, mais le résultat de l'operation OU EXCLUSIF entre le mot et une séquence prédéterminée ayant un coefficient d'autocorrélation élevé. Cette séquence, destinée à la synchronisation, n'est pas liée aux informations de contrôle de la couche transport.

Dans son application à la diffusion de données, le procédé suivant l'invention utilisera une séquence de brassage constituée à partir de l'octet de répétition R du groupe de données ; en particulier, les octets de brassage B peuvent être constitués par le résultat de l'opération OU EXCLUSIF sur R et 15 H (c'est-à-dire 15 en notation hexadécimale) :

$$B = R \oplus 15 \; H.$$

EP 0 221 792 B1

Le procédé est aussi indépendant des niveaux inférieurs à la couche transport, et notamment de la couche physique.

L'invention propose également un dispositif de transmission ou diffusion de données numériques permettant de mettre en oeuvre le procédé ci-dessus défini, comprenant un circuit de commande piloté par un signal de synchronisation donnant les débuts d'occurence et par une horloge de cadencement à la fréquence d'octet, un générateur de séquences de brassage dont une entrée est constituée par la séquence des données à brasser et des informations de contrôle de ces données, et un opérateur de brassage opérant sur la sortie du générateur de séquences de brassage et la séquence des données à brasser et délivrant en sortie une séquence de données brassées par une séquence de brassage différente à chaque occurence d'un même bloc de données.

L'invention sera mieux comprise à la lecture de la description qui suit d'un mode particulier de réalisation, donné à titre de simple exemple et concernant la diffusion de groupes de données suivant la norme DIDON 3. La description se réfère aux dessins qui l'accompagnent, dans lesquels :

- la Figure 1 est un diagramme montrant le format d'une ligne de données dans la procédure DIDON 3 ;
- la Figure 2 est un schéma de principe montrant un circuit utilisable dans un dispositif suivant l'invention,
- la Figure 3 est un schéma électrique du circuit de la Figure 2,
- la Figure 4 est un chronogramme faisant apparaître l'application de l'invention à une diffusion de données suivant la norme DIDON 3, telle que rappelée en Figure 1.

Avant de décrire l'invention, on rappellera brièvement les caractéristiques de système DIDON 3 et notamment celles des couches réseau et transport.

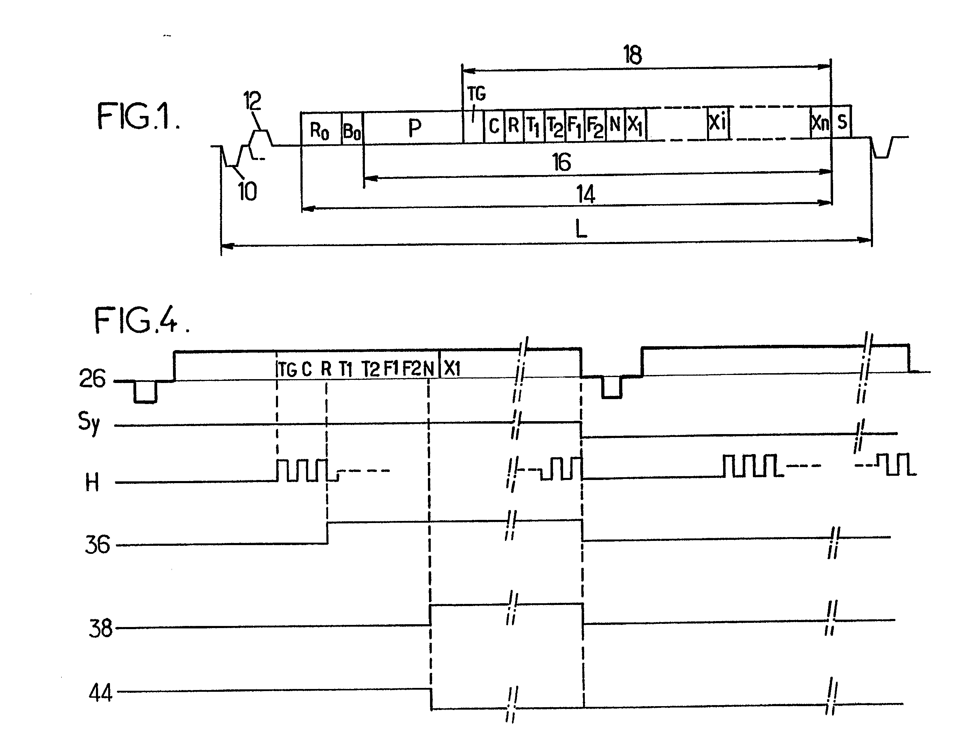

La Figure 1 montre la constitution d'une ligne de données transmises pendant la durée active d'une ligne de télévision L comportant un signal de synchronisation de ligne 10 et une salve de couleur ou d'identification 12 précédant la ligne de données 14. Cette dernière comporte une séquence de synchronisation $R_0$ formée par une séquence de 1 et de 0 alternés, servant à la synchronisation de l'horloge du récepteur, un mot de synchronisation d'octet $B_0$, puis le paquet de données 16.

Le paquet de données constitue la couche réseau (couche 3 ISO). Il comporte un préfixe P et, éventuellement, un suffixe S encadrant le bloc de données 18. Le préfixe est constitué de cinq octets codés Hamming (trois octets d'adresse de paquet, un octet d'indice de continuité, et un octet de structure définissant la nature du paquet de données transmis).

La couche transport (couche 4) est organisée de la manière suivante : les blocs de données 18 qui ont trait à des données provenant de la même source (même adresse) sont organisées séquentiellement en groupes de données, dont le début est identifié par la valeur du bit de poids inférieur dans l'octet de structure. Chaque en-tête de groupe, tel celui montré en Figure 1, comporte huit octets TG, R, T1, T2, F1, F2 et N. Il suffit ici de noter que ces octets représentent des informations de contrôle protégées par u code de Hamming entrelacé et que l'octet R contient une valeur qui est décrémentée à chaque occurence de même groupe jusqu'à zéro (ce qui donne 15 H codé en Hamming).

Enfin, les octets X1,..., Xi,..., Xn constituent les données transportées.

Dans ces conditions, la séquence de brassage utilisera l'octet R qui est disponible à l'émission comme à la réception (puisqu'il est prédéterminé, donc transmis implicitement) et qui est protégé. Cet octet R sera codé en Hamming et donnera alors l'octet B fourni par :

$$B = R \oplus 15 \ H$$

$$\oplus$$

désignant l'opération OU EXCLUSIF entre les deux octets intervenant dans l'opération.

La séquence de brassage sera alors O, O, O, O, O, O, O, O, B,... B.

L'opération de brassage consistera à faire encore le OU EXCLUSIF entre la suite des octets Xi et la séquence de brassage qui change à chaque occurence.

Dans ce qui suit, l'opération de brassage décrite précédemment sera appelée "BLR" (pour Brasseur Linéaire de Répétition).

Si par exemple on a quatre occurences successives d'un groupe, les octets de brassage successifs seront, successivement :

3

| R | = | 3 | c'est-à-dire | 5E | H | qui donne | B | = | 4B | H |
|---|---|---|---|---|---|---|---|---|---|---|
| R | = | 2 | c'est-à-dire | 49 | H | qui donne | B | = | 5C | H |
| R | = | 1 | c'est-à-dire | 02 | H | qui donne | B | = | 17 | H |
| R | = | 0 | c'est-à-dire | 15 | H | qui donne | B | = | 00 | H |

Cet exemple permet de faire plusieurs constatations.

- Les octets B, générateurs des séquences de brassage, bénéficient de la caractéristique Hamming de distance maximale entre deux valeurs consécutives. Pour deux occurences successives, la séquence des octets de brassage est à une distance Hamming de 4 par rapport à la séquence précédente. Cette caractéristique étant conservée par l'operation OU EXCLUSIF, on obtient des séquences de données transmises à distance 4 l'une de l'autre. De cette façon, l'opération effectuée, qu'on peut qualifier de brassage linéaire de répétition ou BLR, garantit une modification statistique de 1 élément binaire sur 2 transmis, entre deux occurences successives.

- Du fait que l'octet de brassage est constitué par le résultat de l'opération OU EXCLUSIF sur l'octet R et la valeur 15 en hexadécimal, on obtient une séquence de brassage constituée de 0 lorsque l'octet R vaut 15 H (cas de la dernière occurence ci-dessus). Le brassage est alors transparent et l'octet initial n'est pas modifié. Cela permet, d'une part, de conserver en transmission une occurence de la séquence en "clair" et, d'autre part, de ne pas faire de brassage si, pour une application déterminée, aucune répétition n'étant effectuée à l'émission, le BLR se trouve être inutile.

Il faut par ailleurs remarquer que le mode de brassage adopté est tel que les opérations de brassage et de débrassage sont identiques :

$BLR = BLR^{-1}$

ou

$BLR [BLR(séquence)] = séquence.$

En d'autres termes, la fonction BLR est involutive et on pourra utiliser le même circuit à l'émission et à la réception.

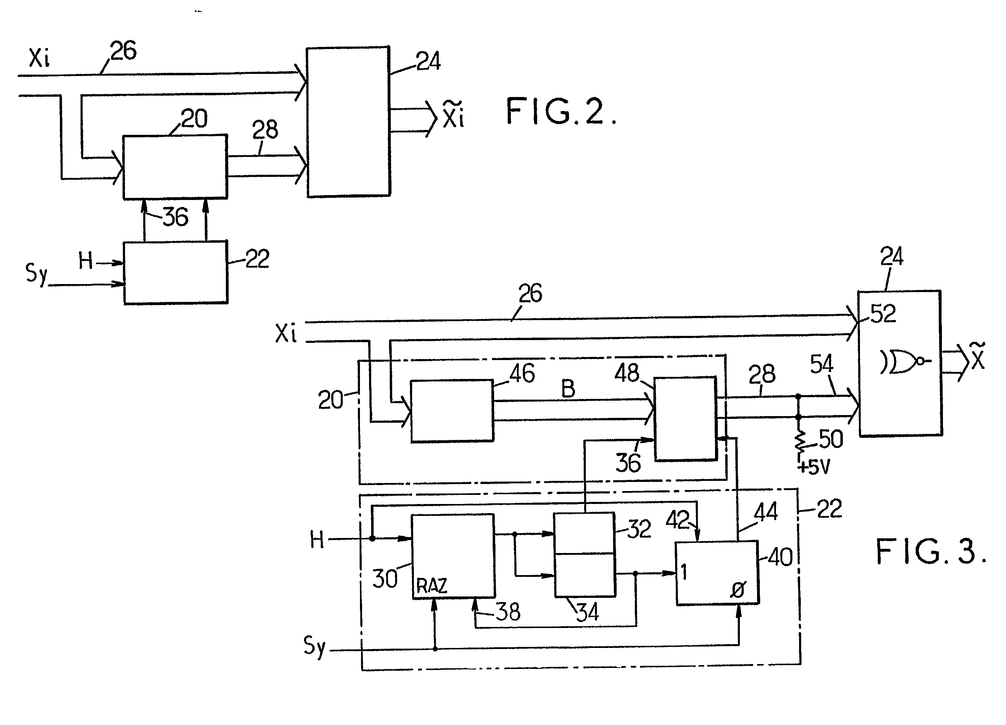

Le brassage peut être assuré par un circuit ayant la constitution de principe montrée en Figure 2, qu'on peut regarder comme constitué d'un générateur de séquences de brassage 20, d'un circuit de commande 22 et d'un opérateur de brassage 24. Les octets successifs sont appliqués en parallèle au générateur 20 at à l'opérateur 24 par un bus 26. Le circuit de commande 22 reçoit de son côté le signal d'horloge H de synchronisation des octets et le signal de synchronisation Sy.

Le générateur 20 a pour rôle d'élaborer les séquences de brassage suivant la fonction R + 15 H à partir de l'octet R (figure 1). L'opérateur 24 réalise la fonction OU EXCLUSIF entre la séquence de brassage transmise par la sortie 28 du générateur 20 et les octets représentant les données Xi fournis par le bus 26. Enfin, le circuit de commande 22 a pour rôle de fournir des impulsions de commande pour chaque octet à brasser.

La Figure 3 montre une constitution possible des composants du circuit de la Figure 2. Le circuit de commande 22 comprend un compteur d'impulsions 30 qui reçoit les signaux d'horloge H et dont le rôle est de fournir le compte d'octets cumulé à deux comparateurs 32 et 34. Le signal de synchronisation Sy indiquant un début d'occurence est appliqué à l'entrée de remise à <zero RAZ du compteur.

Le comparateur 32 a pour rôle de comparer le compte d'octets, fourni par le compteur 30, à la valeur 2. Sa sortie attaque une entrée de verrouillage 36 du générateur 20, comme on le verra plus loin. Le comparateur 32 permet de repérer, dans la suite des octets constituant la séquence, l'octet R qui servira à générer la séquence de brassage.

Le signal fourni à l'entrée de verrouillage 36 permettra au générateur 20 de conserver en mémoire l'octet approprié de la séquence.

Le comparateur 34 a pour rôle de comparer le compte d'octets fourni par le compteur 30 à la valeur 8. La sortie de ce compteur est appliquée à une entrée d'inhibition 38 du compteur 30, permettant d'arrêter le comptage.

Le circuit de commande 22 comporte enfin un générateur d'impulsions 40. L'entrée de cadencement 42 reçoit directement le signal d'horloge octet H, afin qu'il y ait synchronisation entre la sortie 44 du générateur 40 et les octets X. L'entrée 0 du générateur 40 reçoit le signal Sy de début d'occurence, de façon que ce signal (qui marque le début d'une séquence) inhibe l'émission d'impulsions sur la sortie 44. En effet, la présence du signal Sy marque le passage d'octets de contrôle appartenant à la couche 4, octets qui ne doivent pas être brassés. Par contre, le signal de sortie du comparateur 34 indique le début des octets à brasser et il est appliqué à l'entrée 1 du générateur 40 en même temps qu'à l'entrée d'inhibition du compteur 30 qui ne redémarrera qu'à la prochaine séquence, c'est-à-dire à l'apparition suivante du signal Sy.

Le générateur de séquences de brassage 20 comprend un transcodeur d'entrée 46 qui réalise la fonction OU EXCLUSIF entre les octets admis X et la valeur 15 H. Les octets B fournis par le transcodeur 46 sont appliqués à l'entrée d'un réseau 48 de huit bascules binaires comportant l'entrée de verrouillage 36. Grâce à cette entrée de verrouillage, les bascules 48 du réseau sont verrouillées au passage de l'octet B (résultat de l'opération R ⊕ 15 H). La sortie du réseau de bascules 48 est cadencée par l'application, sur son entrée de validation, de la sortie 44 du circuit 40.

Ainsi, lorsqu'aucune impulsion n'est appliquée sur le réseau de bascules 48 par le générateur d'impulsions 40, ce réseau ne présente pas l'octet B en sortie. Un réseau de résistances 50 peut être prévu sur la sortie du réseau de bascules 48 pour présenter un octet nul à l'entrée de l'opérateur de brassage 24. Cet opérateur est constitué par un circuit XOR qui réalise la fonction OU EXCLUSIF entre l'entrée 52 qui reçoit les octets X et l'entrée 54 provenant du générateur de séquences de brassage. La sortie de l'opérateur 24 constitue la sortie du circuit BLR et fournit les octets de données

$$\tilde{X}$$

sous leur forme définitive, pour diffusion par l'intermédiaire des couches de réseau, de liaison et physique (couches 3, 2 et 1) qui sont inchangées par rapport à celles d'un émetteur classique.

Le montage montré en Figure 3 peut être réalisé en composants disponibles dans le commerce : par exemple l'opérateur XOR peut être constitué de deux circuits 74 LS 135 et, pour des raisons de cohérence, le transcodeur 46 et les bascules 48 pourront alors être du type 74 LS 04 et 74 LS 374, respectivement.

Le même dispositif, réalisé sous forme d'une carte enfichable, peut être utilisé aussi bien à l'émission qu'à la réception, seules les liaisons d'entrée étant modifiées, le signal d'horloge étant cette fois fourni par le circuit de récupération classiquement prévu dans les récepteurs.

La Figure 4 donne un exemple de chronogramme des signaux qui apparaissent en divers points du circuit de la Figure 3. Pour plus de simplicité, chacune des lignes du chronogramme porte la même référence que l'emplacement où apparaissent les signaux qu'elle représente. La ligne 26 montre la structure de deux lignes de télévision successives. Le signal de synchronisation Sy présente une transition à l'issue du paquet. Le signal de verrouillage 36 est émis par le comparateur 32 lors de l'apparition de l'octet d'incrémentation R et revient à zéro à la fin de la ligne de données. Le signal d'inhibition 38 arrête le comptage depuis la fin de l'entête du groupe jusqu'à la fin de la ligne de données. Enfin, l'ordre de validation est émis sur la sortie 44 en même temps que l'ordre d'inhibition 38.

## Revendications

1. Procédé de transmission ou de diffusion de données numériques mettant en oeuvre un protocole ISO dont la couche transport autorise les répétitions de blocs de données, caractérisé en ce qu'on émet chaque bloc de données après l'avoir soumis à une opération de brassage linéaire avec une séquence de brassage différente à chaque émission d'un même bloc, la séquence de brassage étant générée à partir des informations de contrôle de la couche de transport.

2. Procédé de diffusion de données selon la revendication 1, caractérisé en ce que l'on utilise une séquence de brassage constituée à partir de l'octet de répétition R du groupe de données,

3. Procédé selon la revendication 2, caractérisé en ce que l'octet de brassage est constituée par le résultat de l'opération OU EXCLUSIF entre l'octet de répétition R et 15 H.

4. Procédé selon la revendication 1, 2 ou 3, caractérisé en ce que le brassage linéaire est constitué par l'opération OU EXCLUSIF effectué bit à bit sur chaque bloc à transmettre et la séquence de brassage correspondante.

5. Dispositif de transmission ou de diffusion de données numériques permettant de mettre en oeuvre le procédé selon la revendication 1, caractérisé en ce qu'il comprend un circuit de commande (28) piloté par un signal de synchronisation donnant les débuts d'occurence et par une horloge de cadencement à la fréquence d'octet, un générateur (20) de séquences de brassage dont une entrée est constituée par la séquence des données à brasser et des informations de contrôle de ces données, et un opérateur de brassage (24) opérant sur la sortie du générateur de séquences de brassage et la séquence des données à brasser et délivrant en sortie une séquence de données brassées par une séquence de brassage différente à chaque occurence d'un même bloc de données.

6. Dispositif selon la revendication 5, destiné à la diffusion de données suivant la norme DIDON 3, caractérisé en ce que l'opérateur de brassage (24) est un circuit OU EXCLUSIF et en ce que le générateur de séquences de brassage est prévu pour fournir une séquence constituée de huit octets à zéro, puis d'octets B, résultant de l'opération OU EXCLUSIF sur l'octet de répétition des groupes et la valeur 15 H en nombre égal à celui des octets à brasser.

## Patentansprüche

1. Verfahren zur Übertragung und Ausstrahlung von digitalen Daten unter Einsatz eines ISO-Protokolls, dessen Transport-Schicht die Wiederholung von Datenblöcken ermöglicht, dadurch gekennzeichnet, daß jeder Datenblock ausgesendet wird, nachdem er einer linearen Verwürfelungsoperation mit einer bei jeder Aussendung ein und desselben Datenblocks wechselnden Verwürfelungssequenz unterworfen wurde, wobei die Verwürfelungssequenz aus den Steuerinformationen der Transport-Schicht erzeugt wird.

2. Verfahren zur Ausstrahlung von Daten nach Anspruch 1, dadurch gekennzeichnet, daß eine Verwürfelungssequenz verwendet wird, die aus dem Wiederhol-Byte R der Datengruppe gebildet wird.

3. Verfahren nach Anspruch 2, dadurch gekennzeichnet, daß das Verwürfelungs-Oktett aus dem Ergebnis der EXKLUSIV-ODER-Verknüpfung zwischen dem Wiederhol-Byte und 15 H (d.h. der Zahl 15 in hexadezimaler Schreibweise) besteht.

4. Verfahren nach Anspruch 1, 2 oder 3, dadurch gekennzeichnet, daß die lineare Verwürfelung aus der bitweise jedem zu übertragenden Datenblock und der entsprechenden Verwürfelungssequenz durchgeführten EXKLUSIV-ODER-Verknüpfung besteht.

5. Vorrichtung zur Übertragung und Ausstrahlung von digitalen Daten, die des Verfahrens nach Anspruch 1 ermöglicht, gekennzeichnet durch
eine Steuerschaltung (28), die von einem den Beginn des jeweiligen Auftretens kennzeichnenden Synchronisiersignal und einem mit der Bytefrequenz arbeitenden Taktgeber gesteuet wird,
einen Generator (20) zur Erzeugung der Verwürfelungssequenz, der mit einem Eingangssignal beaufschlagt wird, das aus der Folge der zu verwürfelnden Daten und der Steuerinformationen dieser Daten besteht,
und eine Verwürfelungsanordnung (24), die auf das Ausgangssignal des Generators (20) zur Erzeugung der Verwürfelungssequenz und die Folge der verwürfelnden Daten einwirkt und an seinem Ausgang eine Folge von Daten liefert, die mit einer bei jedem Auftreten ein und desselben Datenblocks unterschiedlichen Verwürfelungssequenz verwürfelt sind.

6. Vorrichtung nach Anspruch 5 zur Ausstrahlung von Daten nach der Norm DIDON 3, dadurch gekennzeichnet, daß die Verwürfelungsanordnung (24) eine EXKLUSIV-ODER-Schaltung ist und daß der Generator (20) zur Erzeugung der Verwürfelungssequenz so ausgebildet ist, daß er eine Sequenz liefert, die aus acht Null-Oktetts, sodann aus Byte B bestehen, die sich aus der EXKLUSIV-ODER-Verknüpfung des Wiederhol-Byte und 15 H in einer der Zahl der zu verwürfelnden Byte entsprechenden Zahl ergibt.

## Claims

1. Process for transmitting or broadcasting digital data while using an ISO protocole whose transport layer anthorizes repetition of data blocks, characterized in that each data block is transmitted after it has been subjected to a linear scrambling step with a scrambling sequence which differs at each transmission of a same block, the scrambling sequence being generated from the control data of the transport layer.

2. Broadcasting process according to claim 1, characterized in that a scrambling sequence is used which is generated from the repetition byte R of the data group.

3. Process according to claim 2, characterized in that the scrambling byte consists of the result of the XOR operation between the repetition byte R and 15 H.

4. Process according to claim 1, 2 or 3, characterized in that the linear scrambling step consists or the XOR operation carried out bit per bit on each block to be transmitted and on the respective scrambling sequence.

5. Device for transmitting or broadcasting digital data, suitable for carrying out the process according to claim 1, characterized in that it comprises a control circuit (28) driven by a sync signal indicating the beginnings of occurences and by a timing clock at the byte frequency, a scrambling sequence generator (20) one input of which consists of the sequence of the data to be scrambled and information for controlling said data, and a scrambling operator (24) processing the output of the scrambling sequence generator and the sequence of data to be scrambled for delivering an output consisting of a sequence of data scrambled by a scrambling sequence which differs upon each occurence of a same data block.

6. Device according to claim 5, for broadcasting data according to the DIDON 3 standard, characterized in that the scrambling operator (24) is a XNOR circuit and in that the scrambling sequence generator is arranged for delivering a sequence consisting of eight bytes having a zero value, then of bytes B which result from the XOR operation on the group repetition byte and on the value 15 H, the number of bytes B being equal to the number of bytes to be scrambled.

**FIG.1.**

**FIG.4.**

FIG.2.

FIG.3.

EP 0 221 792 B1